# EUROPÄISCHE PATENTSCHRIFT

(11) **EP 3 481 741 B1**
(45) Veröffentlichungstag und Bekanntmachung des Hinweises auf die Patenterteilung: **23.09.2020**
(21) Anmeldenummer: 17754131.5
(22) Anmeldetag: 09.08.2017
(51) Int. Cl.: B65D 81/32, B65D 81/34

(54) **VERPACKUNG**
PACKAGING
EMBALLAGE

(30) Priorität: 09.08.2016 DE 102016214793
(43) Veröffentlichungstag der Anmeldung: 15.05.2019
(73) Patentinhaber: Bachmair, Florian, 53175 Bonn (DE)
(72) Erfinder: Bachmair, Florian, 53175 Bonn (DE)
(74) Vertreter: Grosse, Felix Christopher
(86) Internationale Anmeldenummer: PCT/EP2017/070213
(87) Internationale Veröffentlichungsnummer: WO 2018/029260

(56) Entgegenhaltungen:
- WO-A1-01/04548
- WO-A1-2006/074260
- DE-U1- 20 311 804
- US-A- 3 156 352
- US-A1- 2007 164 013

## Beschreibung

Die Erfindung betrifft eine Verpackung, die eine Mehrzahl stoffdichter Kammern aufweist, welche unterschiedliche Substanzen beinhalten, insbesondere zur separaten Bevorratung von festen und flüssigen Nahrungsmittelbestandteilen. Ferner weist die Verpackung mindestens eine Sollbruchstelle auf, die zwischen zwei aneinander angrenzenden Kammern derart ausgebildet ist, dass ein Bruch der Sollbruchstelle einen stofflichen Austausch zwischen den an die Sollbruchstelle angrenzenden Kammern ermöglicht. Eine solche Verpackung ist aus US 3 156 352 bekannt.

Die Bevorratung einzelner Rezepturbestandteile in einer gemeinsamen Verpackung ist bereits fester Bestandteil in der Lebensmittelindustrie und auch in technischen Anwendungsbereichen. Die hierbei zugrundeliegende Idee ist die, dass dem Verbraucher nicht das fertige Produkt zur Hand gegeben wird, sondern alle oder einige zur Herstellung des Produkts notwendigen Rezepturbestandteile. Diese werden üblicherweise in bereits vorbestimmten Mischungsverhältnissen in einer gemeinsamen Verpackung bevorratet und müssen lediglich zusammengeführt werden, sobald der Verbraucher das Produkt benötigt. Dies ist insbesondere sinnvoll bei Anwendungen, die nur eine begrenzte Zeit lang als Fertigprodukt gelagert werden können, beispielsweise Nahrungsmittel, Klebstoffe, Medikamente und chemische Reagenzien allgemein.

Häufig besteht jedoch neben der Vermengung einzelner Rezepturbestandteile zusätzlich das Bedürfnis, das fertige Produkt bei einer definierten Temperatur zu verabreichen.

Somit ist es erstrebenswert, eine Verpackung aufzuzeigen, bei welcher unter minimalem Aufwand einzelne Rezepturbestandteile zu einem fertigen Produkt bei einer gewünschten Temperatur hergestellt werden können.

Die Lösung der Aufgabe gelingt mit einer Verpackung gemäß Anspruch 1. Vorteilhafte Weiterbildungen sind in den Unteransprüchen gegeben.

Erfindungsgemäß wird somit eine Verpackung mit einer Mehrzahl von Kammern bereitgestellt, die stoffdicht voneinander abgegrenzt sind. Erfindungsgemäß beinhalten die Kammern jeweils unterschiedliche Substanzen. Die Verpackung weist mindestens eine Sollbruchstelle auf, die zwischen einer und einer weiteren Kammer so ausgebildet ist, dass ein Bruch der Sollbruchstelle einen stofflichen Austausch der Substanzen von an die Sollbruchstelle angrenzenden Kammern ermöglicht. Die Verpackung weist ferner ein thermisches Element auf, welches in einem aktivierten Zustand einen Energiefluss aus oder in mindestens eine der Kammern bewirkt.

Die stoffliche Abgrenzung bezieht sich in diesem Zusammenhang im Wesentlichen auf diejenigen Stoffe, die in den Kammern bevorratet sind. Unter dem Begriff "Sollbruchstelle" ist eine beliebig geartete Trennwand, Trennzone oder Trennmembran gemeint, die so ausgestaltet ist, dass unter Normalbedingungen, beispielsweise bei Lagerung und Transport der Verpackung, kein Stofftransport ermöglicht wird, dieser aber durch einen gezielt herbeigeführten Krafteintrag auf die Verpackung herbeigeführt werden kann.

Der Begriff "thermisches Element" ist ganz allgemein als eine Energiequelle oder Energiesenke zu verstehen. Entscheidend ist, dass das thermische Element geeignet ist, einen Wärmeeintrag oder einen Wärmeaustrag aus mindestens einer Kammer der Verpackung zu erzeugen.

Die Verpackung ist somit vorteilhaft für Anwendungen, bei welchen mehrere Stoffe zusammengeführt werden müssen und bei welchen das aus der Zusammenführung erhaltene Produkt zusätzlich gekühlt oder erwärmt werden soll, bevor es aus der Verpackung entnommen wird. Der Vorteil entsteht daraus, dass die wesentlichen, hierfür notwendigen Komponenten bereits in der Verpackung vorliegen, wodurch Lagerung, Transport und Zubereitung des gewünschten Gemisches erheblich vereinfacht werden. Vorteilhaft ist auch, dass die in den einzelnen Kammern vorliegenden Substanzen bereits in den richtigen Mengenverhältnissen vorliegen, wodurch das Risiko einer Fehlrezeptur erheblich reduziert wird. Durch das Vorhandensein der Sollbruchstelle kann zudem vermieden werden, dass Teile der Rezeptur vor der Zusammenführung, etwa durch Unachtsamkeit, verloren gehen und folglich das Gemisch eine falsche Zusammensetzung aufweist. Vielmehr werden die einzelnen Stoffe in exakt dem vorgegebenen Mengenverhältnis zusammengeführt.

Erfindungsgemäß werden die Kammern der Verpackung aus einer zusammenhängenden Folie gebildet. Dies hat den Vorteil, dass der Herstellungsaufwand gering ist. Vorzugsweise wird hierzu eine Folie gefaltet und an den Verpackungsrändern fest verschweißt, wodurch zunächst eine Tasche gebildet wird. Die einzelnen Kammern der Verpackung entstehen beispielsweise durch gezieltes anhaften der Taschenlagen entlang definierter Linien. Unter einer Folie im Sinne der Erfindung ist beispielsweise eine Kunststofffolie oder ein laminierter Werkstoff, beispielsweise laminiertes Papier, zu verstehen.

Es ist zweckmäßig, wenn die Sollbruchstelle aus zwei Folienlagen besteht, die lösbar aneinander haften. Dies hat den Vorteil, dass ein erhöhter Fluiddruck in einer druckbeaufschlagten Kammer die lösbare Verbindung auflöst und so eine fluidische Verbindung zwischen den an die Sollbruchstelle angrenzenden Kammern ermöglicht. Auch kann eine derartige Sollbruchstelle einfach dadurch hergestellt werden, dass zwei übereinanderliegende Folienlagen unter Einfluss von Druck und/oder Temperatur aufeinandergepresst werden. Der Begriff "lösbar" bezieht sich in diesem Zusammenhang auf eine zumutbare, haptisch erzeugbare Krafteinwirkung auf eine oder mehrere Kammern der Verpackung, die eine Ablösung der beiden Folienlagen voneinander hervorruft.

Bevorzugt ist die verwendete Folie zumindest abschnittsweise transparent. Dies hat den Vorteil, dass der Zustand der Substanzen in den Kammern visuell überprüft werden kann. Insbesondere kann während des Mischens mehrerer Substanzen miteinander stets der Fortschritt der Vermischung visuell überprüft werden.

Weiterbildend stellt das thermische Element eine Wärmeleitoberfläche bereit, die mit dem erzeugten Gemisch in Kontakt steht. Mit Hilfe der Wärmeleitoberfläche soll gewährleistet werden, dass der Wärmetransport effektiv über die Systemgrenze des thermischen Elements erfolgt. Im Ergebnis werden dadurch Verlustwärmeströme reduziert, wodurch das thermische Element bei gleichem Resultat kleiner dimensioniert werden kann. Die Wärmeleitoberfläche kann beispielsweise aus einem Metall gefertigt sein und/oder eine Oberflächentextur zur Vergrößerung der Gesamtoberfläche haben. Als Referenz dient hier der Wärmeübergang, der sich zwischen Gemisch und der übrigen Wandstruktur der Verpackung einstellt.

Im Sinne der Erfindung kann die Verpackung eine erste Kammer aufweisen, die einen Feststoff enthält und eine zweite Kammer aufweisen, die eine Flüssigkeit enthält. Die Sollbruchstelle ist dabei zwischen der ersten Kammer und der zweiten Kammer ausgebildet. Durch die separate Bevorratung von Feststoff und Flüssigkeit und durch die geeignet angeordnete Sollbruchstelle kann gewährleistet werden, dass zu jedem beliebigen Zeitpunkt ein frisches Fest-Flüssiggemisch erzeugt werden kann.

Weiterbildend ist es vorteilhaft, wenn der Feststoff Milchpulver und die Flüssigkeit Wasser ist. Dies ist insbesondere für die Zubereitung von Babynahrung von Bedeutung, wo eine unmittelbar vor der Verabreichung zubereitete Milch aus hygienischen und ernährungstechnischen Gründen erwünscht ist. In Verbindung mit dem erfindungsgemäß vorgesehenen thermischen Element kann so mit geringem Aufwand eine optimal dosierte, frisch zubereitete und erhitzte Babymilch hergestellt werden. Gleichwohl kommen weitere technische und nicht-technische Anwendungen in Betracht. Ganz allgemein kommen hierfür alle möglichen Dispersionen und Suspensionen in Frage.

Es ist ferner zweckmäßig, wenn das thermische Element energetisch autark ist. Unter energetisch autark ist gemeint, dass außer der manuellen Aktivierung keine weiteren Vorkehrungen getroffen werden müssen, um das thermische Element in Betrieb zu nehmen. Insbesondere ist gemeint, dass eine Stromversorgung oder Wärmezufuhr von außen nicht erforderlich ist. Ein entscheidender Vorteil ist hierbei, dass die Verpackung an jedem beliebigen Ort zu jeder Zeit eine vollständige Zubereitung des gewünschten Produkts ermöglicht. Der Grundgedanke ist der, dass außer Brechen der Sollbruchstelle, Mischen der Substanzen und Inbetriebnahme des thermischen Elements keine weiteren Schritte oder Mittel vonnöten sind, um zum gewünschten Zustand des Produkts zu gelangen. Das thermische Element kann ein einmal oder mehrmals verwendbares Element sein. Denkbar sind beispielsweise thermische Elemente, die mittels chemischer, elektrischer und/oder mechanischer Energie einen Wärmestrom erzeugen können, der autark ist von äußeren Energieströmen.

Weiterbildend ist das thermische Element ein Heizelement, welches ein Phasenwechselmedium sowie ein Aktivierungselement aufweist. Das Phasenwechselmedium ist in diesem Fall ein exothermes Phasenwechselmedium. Geeignete Phasenwechselmedien bestehen üblicherweise aus einer unterkühlten Schmelze einer chemischen Verbindung oder eines Stoffgemisches. Durch einen Energieeintrag, insbesondere durch das Aktivierungselement, wird in dem Phasenwechselmedium eine Kristallisation angestoßen, wodurch Kristallisationswärme freigesetzt wird. Die Temperatur der Schmelze bleibt bis zur vollständigen Kristallisation konstant. Das Phasenwechselmedium wirkt dabei als Latentwärmespeicher, der eine definierte Menge an Wärmeenergie bei einer bestimmten Temperatur erzeugt und über seine Bewandung an die Umgebung abgibt. Vorteilhaft ist bei dieser Ausführungsform, dass das Phasenwechselmedium in einer geeigneten Konzentration, Menge und Beschaffenheit in der Verpackung vorliegt, sodass das Gemisch in den umliegenden Kammern auf eine definierte Temperatur gebracht werden kann.

Das Aktivierungselement kann mechanisch oder elektrisch ausgeführt sein. Das Aktivierungselement ist bevorzugt eine Blattfeder, die nach einer manuellen Betätigung in eine alternative Position schnappt und durch diesen mechanischen Energieeintrag in der Schmelze eine Kristallisation auslöst. Dies kann durch einen einfachen Fingerdruck erreicht werden. Alternativ ist das Aktivierungselement elektrisch aktivierbar. Entscheidend ist, dass das Aktivierungselement der Schmelze die zum Start der Kristallisation notwendige Aktivierungsenergie zuführt bzw. die hierfür notwendigen Kristallisationskeime in der Schmelze produziert. Der wesentliche Vorteil dieser Ausführungsform ist der, dass außer der manuell/haptisch zugeführten Energie keine weiteren Energien oder Mittel notwendig sind, um die Aufheizung der umliegend in den Kammern vorliegenden Substanzen oder Gemischen zu erreichen.

In einer alternativen Ausführungsform ist das Phasenwechselmedium des thermischen Elements ein endothermes Phasenwechselmedium. Entsprechend umgekehrt wird hier nach der Aktivierung des Phasenwechselmediums ein Wärmestrom aus der Umgebung in das Phasenwechselmedium erzeugt, wodurch die unmittelbare Umgebung abkühlt. Erfindungsgemäß wird dadurch eine Kühlung der in den umliegenden Kammern vorliegenden Substanzen oder Gemischen erreicht.

Der Aktivierung des thermischen Elements erfolgt vorzugsweise unabhängig von der Erzeugung des Gemisches. Demnach können sowohl die voneinander getrennt vorliegenden Substanzen oder aber auch das erzeugte Gemisch nach dem Brechen der Sollbruchstelle erwärmt oder gekühlt werden.

Als Phasenwechselmedien (PCM) können Salze (z.B. Glaubersalz, Natriumacetat) oder organische Verbindungen (z.B. Paraffine, Fettsäuren) verwendet werden. Diese verändern ganz allgemein unter Energieeintrag ihren Aggregatzustand (flüssig-fest) und nehmen dabei Wärmeenergie auf bzw. geben sie ab.

Weiterbildend ist das thermische Element so dimensioniert, dass die mittlere Temperatur des erzeugten Gemisches nie mehr als 37 °C beträgt. Dies ist insbesondere bei der Zubereitung von Lebensmitteln, speziell bei der Zubereitung von Babynahrung, von Vorteil. Durch die geeignete Auswahl und Menge des Phasenwechselmediums kann so mit zwei Handgriffen ein Babynahrungsmittel zubereitet werden, dass in keinem Fall zu heiß ist. Weitere Hilfsmittel zur Herstellung und/oder Temperaturregelung sind folglich nicht notwendig.

Alternativ ist denkbar, dass das thermische Element ausgebildet ist, um eine mittlere Temperatur von mehr als 37 °C, insbesondere von mehr als 60 °C zu erzeugen. Dies ist beispielsweise für die Zubereitung von Suppen oder Tees von Vorteil, da so eine angenehme und gewünschte Temperatur erreicht wird. Des Weiteren sind höhere Temperaturen auch bei der Erzeugung von chemischen Produkten, beispielsweise Klebstoffen oder dergleichen, notwendig.

Ferner ist es zweckmäßig, wenn das thermische Element lose oder lösbar in einer der Kammern vorliegt. Dies hat den Vorteil, dass bei der Herstellung der Verpackung Produktions- und Entwicklungskosten gespart werden können, da das thermische Element während des Produktionsverfahrens einfach vor der Versiegelung neben der vorgesehenen Substanz in die betreffende Kammer eingebracht werden kann. Ein Vorteil ist auch, dass ein derart ausgeführtes thermisches Element prinzipiell wiederverwendet werden kann, wodurch Kosten und Ressourcen eingespart werden. Alternativ ist es auch denkbar, eine eigens für das thermische Element vorgesehene Kammer auszubilden. In diesem Fall ist es besonders vorteilhaft, wenn diese Kammer eine Sollbruchstelle zu einer angrenzenden Kammer aufweist, damit das Gemisch oder eine Substanz in Kontakt mit dem thermischen Element kommen kann.

Erfindungsgemäß ist es von Vorteil, wenn die Verpackung eine Hohlkammer aufweist zur thermischen Isolierung der Verpackung gegenüber der Umgebung. Die Hohlkammer ist bevorzugt zwischen der Außenhülle der Verpackung und einer oder mehreren Kammern ausgeführt. Der Begriff Hohlkammer bezieht sich auf eine Kammer, die entweder mit Überdruck oder Unterdruck mit einem Gas gefüllt ist. Vorzugsweise ist das Gas ein Gas mit geringer Wärmeleitfähigkeit, beispielsweise Krypton oder Xenon. Besonders bevorzugt ist ein Gas mit geringer Wärmeleitfähigkeit und mit Unterdruck in der Hohlkammer vorhanden. Der Vorteil einer Hohlkammer ist ganz allgemein in der reduzierten Wärmeleitung zwischen den Kammern der Verpackung und der Umgebung begründet.

Weiterbildend ist es vorteilhaft, wenn die Verpackung ferner einen Temperaturindikator zur Anzeige der Temperatur im Inneren der Verpackung aufweist. Vorzugsweise umfasst der Temperaturindikator einen Temperaturfühler, der mit dem Inneren einer Kammer derart verbunden ist, dass der Temperaturindikator die Innentemperatur der Kammer anzeigt. Mit Hilfe eines Temperaturindikators kann visuell festgestellt werden, wann der am Temperaturindikator anliegende Stoff bzw. das Gemisch eine Zieltemperatur erreicht hat. Im einfachsten Fall stellt der Temperaturindikator ein Kontrollfeld bereit, welches bei Erreichen der Zieltemperatur eine definierte Farbe abbildet. Dies kann beispielsweise mittels eines herkömmlichen Thermometers oder mittels temperatursensibler Stoffe erreicht werden. Dies ist insbesondere dann von Vorteil, wenn die Kammern der Verpackung von der Außenhülle der Verpackung beispielsweise durch eine Hohlkammer beabstandet sind und dadurch deren Temperatur haptisch nicht abschätzbar ist.

Nachfolgend wird die Erfindung anhand von in der Zeichnung gezeigten Ausführungsbeispielen näher erläutert. Es zeigen schematisch:
- Fig. 1: eine Verpackung gemäß einer ersten Ausführungsform;
- Fig. 2: eine Verpackung gemäß einer zweiten Ausführungsform;
- Fig. 3: eine Verpackung gemäß einer dritten Ausführungsform;
- Fig. 4: eine Verpackung gemäß einer vierten Ausführungsform;
- Fig. 5: eine Verpackung gemäß einer fünften Ausführungsform; und
- Fig. 6: eine Verpackung gemäß einer fünften Ausführungsform in einem Querschnitt A-A; und
- Fig. 7: eine Verpackung gemäß einer sechsten Ausführungsform.

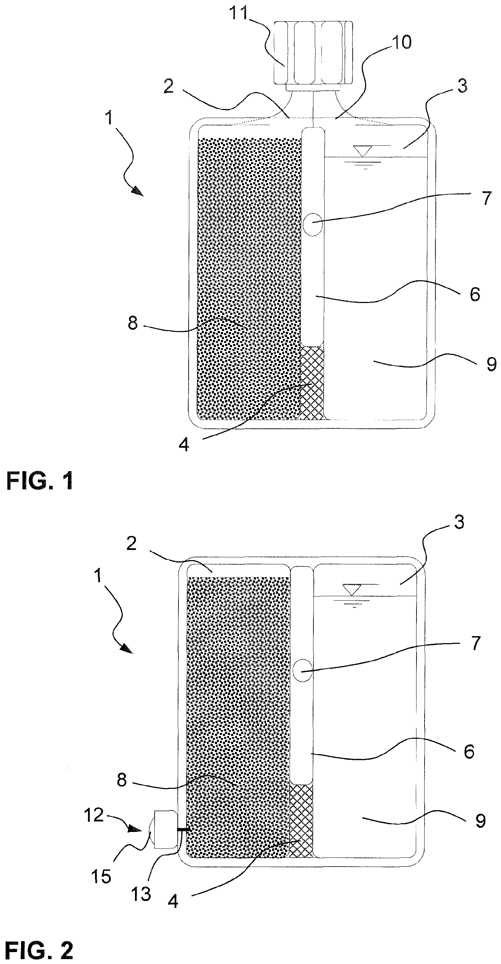

Fig. 1 zeigt eine erfindungsgemäße Verpackung 1 mit einer ersten Kammer 2 und einer zweiten Kammer 3 sowie eine Sollbruchstelle 4, die im unteren Bereich der Verpackung eine fluidische Verbindung zwischen der ersten Kammer 2 und der zweiten Kammer 3 ermöglicht, wenn diese durch gezielte Krafteinwirkung gebrochen wird. Wird die Sollbruchstelle 4 gebrochen, entsteht demnach eine neue gemeinsame Kammer; die Mischkammer 5 (nicht dargestellt). Diese besteht folglich nun aus der ersten Kammer 2 und der zweiten Kammer 3. Zwischen der ersten Kammer 2 und der zweiten Kammer 3 befindet sich ferner ein thermisches Element 6 und ein Aktivierungselement 7. Das thermische Element 6 soll hier ein exothermes Phasenwechselmedium sein, welches ausgehend von einer Aktivierung durch das Aktivierungselement 7 kristallisiert und dabei an die erste Kammer 2 und die zweite Kammer 3 Wärme abgibt. Das Aktivierungselement 7 ist in dem gezeigten Fall als Blattfeder ausgeführt. Fig. 1 ist ferner zu entnehmen, dass in der ersten Kammer 2 ein Feststoff 8 und in der zweiten Kammer 3 eine Flüssigkeit 9 vorhanden ist. Beide Kammern münden getrennt voneinander in einen gemeinsamen Auslass 10, welcher durch einen Schraubverschluss 11 verschlossen ist.

Zur Zubereitung des Feststoff-Flüssigkeit-Gemisches wird nun zunächst die Sollbruchstelle 4 gebrochen und der Feststoff 8 aus der ersten Kammer 2 mit der Flüssigkeit 9 aus der zweiten Kammer 3 vermischt. Es entsteht dadurch eine gemeinsame Kammer 5, die ein Gemisch enthält und die das thermische Element 6 umströmen kann bzw. benetzt. Gegebenenfalls wird das Gemisch geschüttelt. Zu jedem Zeitpunkt der Zubereitung kann das thermische Element 6 aktiviert werden, wodurch Wärme abgegeben wird. Die Aktivierung erfolgt in der Regel nach dem Brechen der Sollbruchstelle 4 oder in etwa zur gleichen Zeit. Gleichzeitiges Schütteln während des Aufheizens führt aufgrund besserer Umströmung und turbulentem Wärmeübergang zu einer verbesserten Erwärmung des Gemisches. Sobald das Gemisch die gewünschte mittlere Temperatur erreicht hat, wird der Schraubverschluss 11 geöffnet und das Gemisch aus der Verpackung 1 entleert.

Fig. 2 entspricht einer etwas vereinfachten Version der in Fig. 1 dargestellten Ausführungsform. Hier wird der gemeinsame Auslass 10 sowie der Schraubverschluss 11 nicht ausgebildet. Zum Entleeren der Verpackung 1 wird nach dem Vermengen des Feststoffs 8 mit der Flüssigkeit 9 ein Randbereich der Verpackung ab- oder aufgeschnitten und das Gemisch entnommen. Zur visuellen Bestimmung der Temperatur ist ferner ein Temperaturindikator 12 vorgesehen, der mittels eines in die erste Kammer hineinragenden Temperaturfühlers 13 ein visuelles Signal abbildet, das einen Rückschluss dahingehend ermöglicht, ob die gewünschte Temperatur bereits erreicht ist oder nicht. Im gezeigten Beispiel ist der Temperaturfühler 13 ein Fluidthermometer, welches so dimensioniert ist, dass bei Erreichen einer Zieltemperatur die Expansionsflüssigkeit einen Bereich auf dem Anzeigefeld 14 des Temperaturindikators einfärbt. Selbstverständlich kann auch ein Temperaturindikator 12 mit einem berührungslosen Temperaturfühler eingesetzt werden, beispielsweise mit einem aufklebbaren Temperaturfühler. Dies kann aus Gründen der Hygiene zweckmäßig sein.

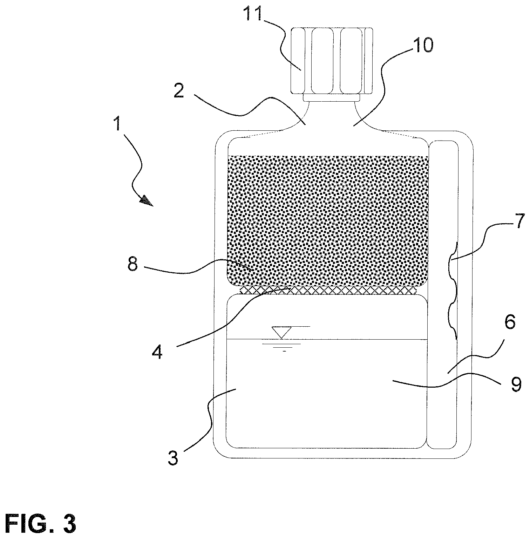

Fig. 3 zeigt eine leicht abgewandelte Ausführungsform der Verpackung 1. Hier sind die erste Kammer 2 und die zweite Kammer 3 übereinander angeordnet und durch eine Sollbruchstelle 4, die horizontal verläuft miteinander zu einer gemeinsamen Kammer 5 verbindbar. Das thermische Element 6 ist hierbei seitlich angeordnet und erstreckt sich über die gesamte Höhe der beiden übereinander angeordneten Kammern. Die Zubereitung des Gemisches erfolgt identisch zu der zuvor beschriebenen Vorgehensweise.

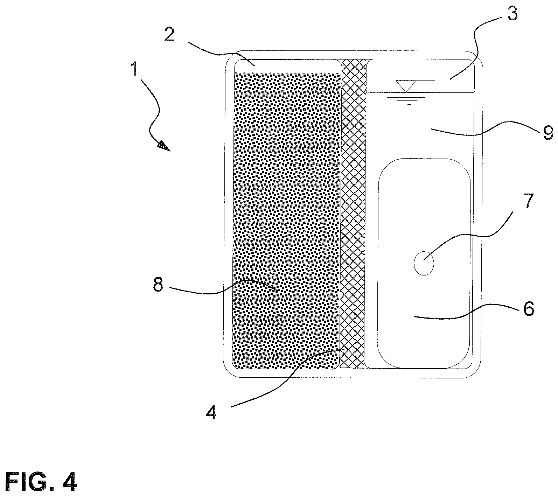

In Fig. 4 ist eine weiter vereinfachte Ausführungsform der erfindungsgemäßen Verpackung 1 abgebildet. Die Verpackung 1 besteht hier im Wesentlichen aus nur einer Folie, die an ihren Rändern so verschweißt ist, dass sie eine taschen- oder tütenähnliche Struktur ausbildet. Die Verpackung weist ferner eine vertikal verlaufende Sollbruchstelle 4 auf, die sich entlang der gesamten Höhe bzw. Länge der Verpackung 1 erstreckt. Dadurch wird eine erste Kammer 2 sowie eine zweite Kammer 3 ausgebildet. Die hierfür verwendete Sollbruchstelle entsteht dadurch, dass die beiden Folienlagen der Außenhülle an ihrer Innenseite lösbar miteinander verbunden werden. Zum Lösen der Sollbruchstelle wird eine der Kammern mit Druck beaufschlagt, wodurch sich die beiden miteinander lösbar verbundenen Folienlagen wieder voneinander trennen und eine gemeinsame Kammer 5 gebildet wird. Die Verpackung wird mittels des thermischen Elements 6 beheizt oder gekühlt. Das thermische Element 6 ist dabei frei beweglich oder einseitig befestigt in einer der beiden Kammern vorhanden. Das thermische Element ist als flaches Bauteil ausgeführt, um eine möglichst große Wärmeleitoberfläche auszubilden. Zum Zubereiten des Gemisches wird also zunächst die Sollbruchstelle 4 gelöst, das thermische Element 6 aktiviert und das Gemisch während des Schüttelns erhitzt. Zur Entnahme des Gemisches wird die Verpackung an einer beliebigen Stelle geöffnet. Das thermische Element 6 kann wiederverwendet werden.

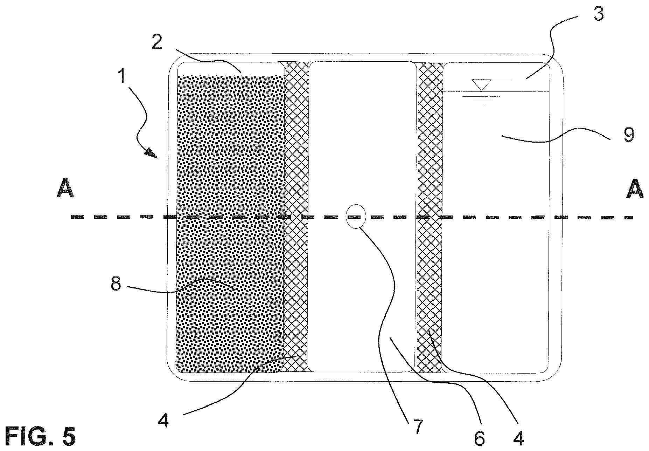

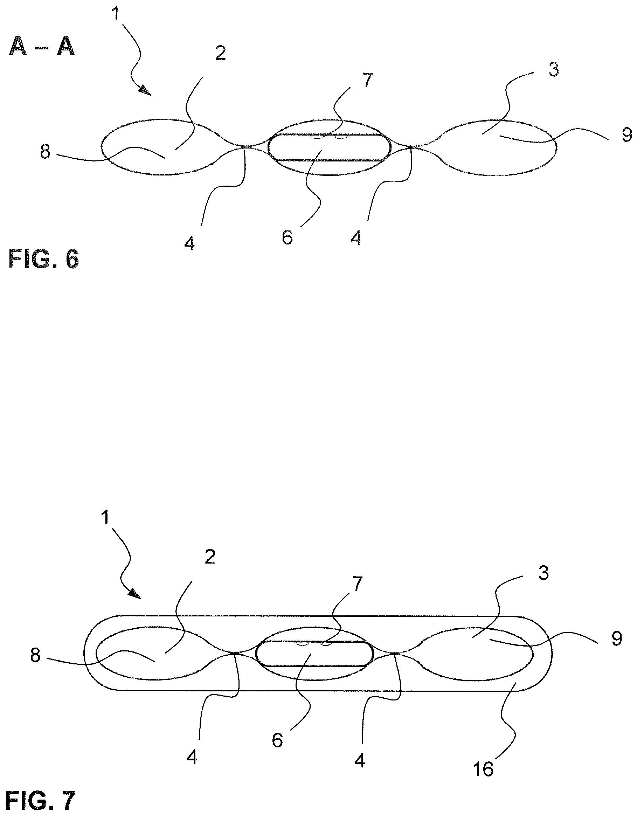

Alternativ kann das thermische Element 6 auch in einer eigenen Kammer untergebracht werden, wie beispielsweise in Fig. 5 und Fig. 6 dargestellt. Auch hier besteht die Verpackung 1 aus zwei Lagen Folie, die an den Rändern verschweißt und entlang der Sollbruchstellen 4 lösbar miteinander verbunden sind. Dadurch, dass der Feststoff 8 von der Flüssigkeit 9 durch zwei Sollbruchstellen 4 voneinander getrennt ist, ist eine ungewollte Vermischung durch versehentliches Lösen einer Sollbruchstelle 4 minimiert. Fig. 6 verdeutlicht dies Anhand eines Querschnitts entlang des Schnitts A-A. Zwischen der ersten Kammer 2 und der zweiten Kammer 3 ist eine weitere Kammer ausgebildet, die das thermische Element 6 umschließt. Dabei ist es nicht notwendig, dass die Kammer größer ist als das thermische Element 6; die gewählte Darstellung dient lediglich der grafischen Verdeutlichung. Um die gewünschte Zubereitung zu erhalten, müssen demnach die zwei Sollbruchstellen 4 gelöst und das thermische Element 6 mit Hilfe des Aktivierungselements 7 aktiviert werden. Sobald die Sollbruchstellen 4 gelöst sind, umströmt das erhaltene Gemisch das thermische Element an dessen Wärmeleitoberfläche. Die Heizeffizienz kann durch das Vorsehen einer Hohlkammer 16 entschieden verbessert werden. Eine derartige Hohlkammer ist beispielsweise in Fig. 7 schematisch dargestellt. Durch die Anwesenheit der Hohlkammer erfolgt der Wärmetransport zwischen Kammer und Umgebung stets über den gasgefüllten Hohlraum, welcher die einzelnen Kammern der Verpackung 1 umschließt. Dieser Transport ist stets geringer als der Wärmetransport, der aus direkt an die Kammer angrenzende Fest- oder Flüssigstoffe resultiert, insbesondere wenn das Gas in der Hohlkammer 16 ein Gas mit geringer Wärmeleitfähigkeit ist, beispielsweise Krypton oder Xenon.

### BEZUGSZEICHENLISTE

- 1: Verpackung
- 2: erste Kammer
- 3: zweite Kammer
- 4: Sollbruchstelle
- 5: Mischkammer
- 6: thermisches Element
- 7: Aktivierungsmittel
- 8: Feststoff
- 9: Flüssigkeit
- 10: Auslassöffnung
- 11: Schraubverschluss
- 12: Temperaturindikator
- 13: Temperaturfühler
- 15: Anzeigefeld
- 16: Hohlkammer

## Patentansprüche

1. Verpackung (1) mit einer Mehrzahl stoffdicht voneinander abgegrenzter Kammern (2, 3), wobei die Kammern (2, 3) unterschiedliche Substanzen beinhalten, und mit mindestens einer Sollbruchstelle (4), die zwischen zwei aneinander angrenzenden Kammern (2, 3) derart ausgebildet ist, dass ein Bruch der Sollbruchstelle (4) einen stofflichen Austausch der Substanzen der an die Sollbruchstelle (4) angrenzenden Kammern (2, 3) ermöglicht, **dadurch gekennzeichnet dass**
die Verpackung (1) ferner ein aktivierbares thermisches Element (6) aufweist, welches in einem aktivierten Zustand einen Energiefluss aus oder in mindestens eine der Kammern bewirkt, wobei die Kammern (2, 3) der Verpackung (1) aus einer zusammenhängenden Folie gebildet werden.

2. Verpackung (1) nach Anspruch 1,
**dadurch gekennzeichnet, dass**
die Sollbruchstelle (4) aus zwei Folienlagen besteht, die lösbar aneinander haften.

3. Verpackung (1) nach Anspruch 1 oder 2,
**dadurch gekennzeichnet, dass**
das thermische Element (6) eine Wärmeleitoberfläche bereitstellt, die mit dem erzeugten Gemisch in Kontakt steht.

4. Verpackung (1) nach einem der vorherigen Ansprüche,
**dadurch gekennzeichnet, dass**
eine erste Kammer (2) der Verpackung (1) einen Feststoff (8) enthält und eine zweite Kammer (4) der Verpackung (1) eine Flüssigkeit (9) enthält, wobei eine Sollbruchstelle (10) zwischen der ersten Kammer (3) und der zweiten Kammer (4) ausgebildet ist.

5. Verpackung (1) nach Anspruch 4,
**dadurch gekennzeichnet, dass**
der Feststoff (8) Milchpulver und die Flüssigkeit (9) Wasser ist.

6. Verpackung (1) nach einem der vorherigen Ansprüche,
**dadurch gekennzeichnet, dass**
das thermische Element (6) energetisch autark ist.

7. Verpackung (1) nach einem der vorherigen Ansprüche,
**dadurch gekennzeichnet, dass**
das thermische Element (6) ein Heizelement ist, welches ein Phasenwechselmedium sowie ein Aktivierungselement (7) aufweist.

8. Verpackung (1) nach Anspruch 7,
**dadurch gekennzeichnet, dass**
das Aktivierungselement (7) eine manuell betätigbare Blattfeder ist.

9. Verpackung (1) nach einem der vorherigen Ansprüche,
**dadurch gekennzeichnet, dass**
das thermische Element (6) so dimensioniert ist, dass die mittlere Temperatur des erzeugten Gemisches nie mehr als 37 °C beträgt.

10. Verpackung (1) nach einem der vorherigen Ansprüche,
**dadurch gekennzeichnet, dass**
das thermische Element (6) lose in einer der Kammern vorliegt.

11. Verpackung (1) nach einem der vorherigen Ansprüche,
**dadurch gekennzeichnet, dass**
die Verpackung (1) eine Hohlkammer (16) zur thermischen Isolierung der Verpackung (1) gegenüber der Umgebung aufweist.

12. Verpackung (1) nach einem der vorherigen Ansprüche,
**dadurch gekennzeichnet, dass**
die Verpackung (1) einen Temperaturindikator (12) zur Anzeige der Temperatur im Inneren der Verpackung (1) aufweist.

## Claims

1. A packaging (1) having a plurality of material-tight separated chambers (2, 3), wherein the chambers (2, 3) contain different substances, and having at least one predetermined breaking point (4) that is formed between two adjacent chambers (2, 3) such that a break in the predetermined breaking point (4) enables a material exchange of the substances of chambers (2, 3) adjacent to the predetermined breaking point (4),
**characterized in that**
the packaging (1) further has a thermocouple (6) capable of being activated that causes an energy flow from or into at least one of the chambers in an activated state, wherein the chambers (2, 3) of the packaging are formed of a continuous film.

2. The packaging (1) according to claim 1,
**characterized in that**
the predetermined breaking point (4) consists of two film layers that detachably adhere to each other.

3. The packaging (1) according to claim 1 or 2,
**characterized in that**
the thermocouple (6) provides a heat-conducting surface that contacts the generated mixture.

4. The packaging (1) according to any of the preceding claims,
**characterized in that**
a first chamber (2) of the packaging (1) contains a solid (8) and a second chamber (4) of the packaging (1) contains a liquid (9), wherein a predetermined breaking point (10) is formed between the first chamber (3) and the second chamber (4).

5. The packaging (1) according to claim 4,
**characterized in that**
the solid (8) is dried milk and the liquid (9) is water.

6. The packaging (1) according to any of the preceding claims,
**characterized in that**
the thermocouple (6) is energetically self-sufficient.

7. The packaging (1) according to any of the preceding claims,
**characterized in that**
the thermocouple (6) is a heating element that has a phase-change medium as well as an activation element (7).

8. The packaging (1) according to claim 7,
**characterized in that**
the activation element (7) is a leaf spring that can be actuated manually.

9. The packaging (1) according to any of the preceding claims,
**characterized in that**
the thermocouple (6) is of such a size that the mean temperature of the mixture generated is never above 37°C.

10. The packaging (1) according to any of the preceding claims,
**characterized in that**
the thermocouple (6) is present loose in one of the chambers.

11. The packaging (1) according to any of the preceding claims,
**characterized in that**
the packaging (1) has a hollow chamber (16) for thermally insulating the packaging (1) from the environment.

12. The packaging (1) according to any of the preceding claims,
**characterized in that**
the packaging (1) has a temperature indicator (12) for indicating the temperature inside the packaging (1).

## Revendications

1. Emballage (1) comprenant une pluralité de chambres (2, 3) séparées l'une de l'autre de façon étanche aux substances, lesdites chambres (2, 3) contenant des substances différentes, et au moins une zone de rupture préétablie (4) réalisée entre deux chambres adjacentes l'une à l'autre de façon qu'une rupture de ladite zone de rupture préétablie (4) permet un échange des substances contenues dans lesdites chambres (2, 3) adjacentes à ladite zone de rupture préétablie (4),
**caractérisé en ce que**
l'emballage (1) comprend en outre un élément thermique (6) activable qui en état activé entraîne un flux d'énergie depuis ou dans au moins une des chambres, les chambres (2, 3) de l'emballage (1) étant formées par un film continu.

2. Emballage (1) selon la revendication 1,
**caractérisé en ce que**
ladite zone de rupture préétablie (4) est constituée de deux couches de film adhérant l'une à l'autre de façon amovible.

3. Emballage (1) selon la revendication 1 ou 2,
**caractérisé en ce que**
ledit élément thermique (6) offre une surface de transfert de chaleur qui est en contact avec le mélange généré.

4. Emballage (1) selon l'une quelconque des revendications précédentes,
**caractérisé en ce que**
une première chambre (2) de l'emballage (1) contient une substance solide (8) et une deuxième chambre (4) de l'emballage (1) contient un liquide (9),
une zone de rupture préétablie (10) étant réalisée entre ladite première chambre (3) et ladite deuxième chambre (4).

5. Emballage (1) selon la revendication 4,
**caractérisé en ce que**
la substance solide (8) est du lait en poudre et le liquide (9) est de l'eau.

6. Emballage (1) selon l'une quelconque des revendications précédentes,
**caractérisé en ce que**
ledit élément thermique (6) est énergétiquement autonome.

7. Emballage (1) selon l'une quelconque des revendications précédentes,
**caractérisé en ce que**
ledit élément thermique (6) est un élément de chauffage comprenant un matériau de changement de phase et un élément d'activation (7).

8. Emballage (1) selon la revendication 7,
**caractérisé en ce que**
ledit élément d'activation (7) est un ressort à lame apte à être actionné manuellement.

9. Emballage (1) selon l'une quelconque des revendications précédentes,
**caractérisé en ce que**
ledit élément thermique (6) est dimensionné tel que la température moyenne du mélange généré ne dépasse pas 37 °C.

10. Emballage (1) selon l'une quelconque des revendications précédentes,
**caractérisé en ce que**
ledit élément thermique (6) est situé dans une de chambres en état non-fixé.

11. Emballage (1) selon l'une quelconque des revendications précédentes,
**caractérisé en ce que**
l'emballage (1) comprend une chambre creuse (16) pour une isolation thermique de l'emballage (1) par rapport à l'environnement.

12. Emballage (1) selon l'une quelconque des revendications précédentes,
**caractérisé en ce que**
l'emballage (1) comprend un indicateur de température (12) pour indiquer la température à l'intérieur de l'emballage (1).
